# EUROPEAN PATENT SPECIFICATION

(11) **EP 1 091 989 B1**
(45) Date of publication and mention of the grant of the patent: **11.12.2002**
(21) Application number: 99919129.9
(22) Date of filing: 18.05.1999
(51) Int. Cl.: C08G 8/04, C03C 17/32

(54) **STABILIZED AQUEOUS PHENOLIC BINDER FOR MINERAL WOOL AND PRODUCTION OF MINERAL WOOL PRODUCTS**
STABILISIERTE, WÄSSERIGE PHENOLHARZ-BINDEMITTEL FÜR MINERALWOLLE UND VERFAHREN ZUR HERSTELLUNG VON MINERALWOLLPRODUKTEN
LIANT PHENOLIQUE AQUEUX STABILISE POUR LAINE MINERALE ET PRODUCTION D'ARTICLES EN LAINE MINERALE

(30) Priority: 18.05.1998 DK 68098
(43) Date of publication of application: 18.04.2001
(73) Proprietor: Rockwool International A/S, 2640 Hedehusene (DK)
(72) Inventor: NISSEN, Poul, Christian, DK-3650 Olstykke (DK); HANSEN, Erling, Lennart, DK-2820 Gentofte (DK)
(74) Representative: Kyed, Iver
(86) International application number: DK9900273
(87) International publication number: WO99060041

(56) References cited:
- CA-A- 1 001 788
- US-A- 3 870 669

## Description

### 1. BACKGROUND OF THE INVENTION

The present invention relates to a stabilized aqueous phenolic binder for mineral wool; a method of producing an emulsifiable phenolic resin; an emulsifiable phenolic resin obtainable by the method; a method of producing a stabilized phenolic binder for mineral wool; a stabilized phenolic binder obtainable by the method; use of said binder in production of mineral wool products; methods of producing mineral wool products; and mineral wool products obtainable by the methods.

### The Technical Field

It is known that phenolic resins and binders may contain low-reacted and unreacted reactants, e.g. phenol and formaldehyde, which evaporate during the making of mineral wool and cause pollution problems and reduced efficiency and performance of the binder in various bonding applications. Accordingly, it is desired that the resin is as free as possible from any unconverted starting materials or residues thereof while its useful qualities are preserved

Methods to achieve this include reacting e.g. phenol with excess of e.g. formaldehyde in presence of an alkaline catalyst to ensure a low content of free phenol and then reacting the excess formaldehyde with an aldehyde scavenger e.g. a nitrogen-containing compound such as urea, melamin or ammonia.

Addition of ammonia further stabilizes the phenolic resin and prevents it from separating into two liquid phases or precipitating out in a solid or crystal phase. Such solid or crystal phases are difficult to dissolve later. Furthermore, the amount of ammonia helps to stabilize the solution in order to achieve a better water dilutability when the resin is to be used in a binder.

Any excess of ammonia, however, causes an undesired emission of ammonia during the application of the binder and the curing of such a binder. Thus, there is a need for a stabilized phenolic binder for mineral wool which does not exhibit this drawback.

### Prior Art Disclosures

WO 96/26 164 discloses a phenolic binder comprising phenol, formaldehyde, a sugar compound, and ammonia for mineral wool products for which emission of ammonia is lowered by adding the sugar compound before addition of ammonia.

US 5 371 140 discloses a stable emulsifiable phenolic resin and a binder for mineral wool products exemplified to have 0.01% by weight of free phenol and 0.6% by weight of formaldehyde. The emulsifying agent is a proteinaceous material such as casein and soya protein in an amount about 0.25% to about 10% by weight. Other emulsifiers include gum arabic, guar gum, Karaya gum, ammonium alginate, polyvinyl alcohol, polyvinyl acetate and carboxylated methylcellulose. Also, combinations of gum arabic and polysaccharides consisting essentially of mannose and galactose units, or D-mannuronic and L-guluronic acid units may be used. The emulsifier prevents crystallisation and makes it possible to store the resin before use. Nothing is indicated or suggested about how to provide a low ammonia emission during a process of making mineral wool, nor about use of such emulsifying agents in amounts less than 0.1% by weight. On the contrary, it is stated that below 0.1% by weight, the phenolic resin system loses its water emulsifiability.

US 4 060 504 discloses use of casein as an emulsifier in concentrations from 1 to 12% by weight.

JP 7 268 181 discloses a phenolic resin composition comprising a casein emulsifier, for use for the impregnation and reinforcement of paper- or cloth-based materials, or as a binder for glass fibre and wood chips. Casein may be present in concentrations from 0.1 to 5% by weight together with an anionic surfactant which ensures a stable solution.

Shay et al., "A new class of alkali-swellable association thickeners", JOCCA, Nov. 1993, Journal of the Oil & Color Chemists' Association, discloses so-called HEURASE thickeners combining the chemistries of both alkali-swellable emulsions (ASE) and hydrophobic modified ethoxylate urethanes (HEUR) thickeners. HEURASE thickeners provided under the trade mark Polyphobe® by Union Carbide are known as rheological modifiers in paints but have not been used in binders for mineral wool.

DE 2 330 852 discloses water dilutable aqueous emulsion- and protective colloid-containing dispersions of phenolic resin comprising non-ionic emulsifiers and protective colloids, such as poly vinyl alcohol, added after the formation of the emulsion to protect it, and use thereof e.g. as a binder for mineral wool plates.

### 2. DISCLOSURE OF THE INVENTION

### Object of the Invention

It is an object of the present invention to provide an aqueous phenolic binder for mineral wool which during the making of mineral wool exhibits a low emission of polluting low molecular weight compounds such as free phenol and free ammonia.

It is another object to provide a phenolic resin for a binder that is stable for transportation and storage for a suitable period of time.

It is still another object to provide an aqueous phenolic binder for the production of mineral wool products which exhibits a low amount of free phenol and free ammonia, and which exhibits a high binding capacity and ensures a good product quality of the mineral wool products.

It is a further object of the present invention to provide an aqueous binder which can be used in the normal processes of applying binders in the production of mineral wool products, and which results in a reduced need of cleaning process equipment.

### A stabilized phenolic binder

In an aspect of the invention, these objects are fulfilled by providing a stabilized aqueous phenolic binder for mineral wool comprising an emulsified phenolic resin consisting essentially of a phenolic resin having a degree of conversion of phenol of 99% or more, said binder containing a protective colloidal agent of an addition terpolymer consisting essentially of a carboxylic functional monomer X, a relative water-insoluble monomer Y, and a urethane functional associative monomer Z, having the formula

-[X]-[Y]-[Z]-

wherein 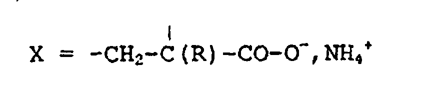 wherein R is H, methyl or ethyl, 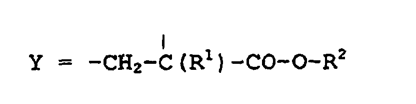 wherein R¹ is H, methyl or ethyl, and R² is methyl, ethyl, propyl or butyl, and 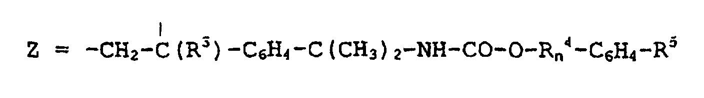 wherein R³ is H, methyl or ethyl, R⁴ is a C₂-C₄ oxylalkylene group and R⁵ is a C₅-C₁₅ group and n is 6-150, preferably 40-60 and more preferably 50.

It surprisingly turns out that a stabilized aqueous phenolic binder for mineral wool according to the invention, comprising an emulsified phenolic resin having a degree of conversion of phenol of about 99% or more, i.e. a phenolic resin of relatively high molecular weight, can be obtained with a low content of unreacted components, e.g. phenol and formaldehyde, and that the emulsified phenolic resin can be stabilized for a sufficient time for transportation and storage thereof for use in the normal production of mineral wool products; said effects being obtained by adding to the binder a protective colloidal agent as claimed, said protective colloidal agent wholly or partly surrounding droplets of the phenolic resin without invading the internal phase thereof.

This method of stabilizing the emulsified phenolic resin only requires addition of a small amount of ammonia, beyond the amount to be added to react with excess formaldehyde, and therefore, the emission of ammonia can be lowered or even avoided.

In a preferred embodiment, the content of free phenol is below 0.5% by weight.

In a preferred embodiment, the protective colloidal agent is a modified ethoxalate urethane, such as Polyphobe®.

Examples of such agents available under the trade mark Polyphobe® are preferably Polyphobe® 102, 103, and TR117 supplied by Union Carbide Corporation.

The concentration of the protective colloidal agent is chosen in any suitable amount providing sufficient stability of the emulsified phenolic resin binder and which amount does not impair its binding properties.

In a preferred embodiment, the protective colloidal agent is in a concentration less than 10% by weight, preferably less than 1% by weight, most preferred less than 0.3% by weight, in particular less than 0.1% by weight based on solid content.

Even smaller concentrations can be applied in some cases. In a preferred embodiment the concentration of the protective colloidal agent is between 0.05 and 0.02% by weight whereby suitable stabilities and binding properties are obtained.

The protective colloidal agents are prepared according to methods known in the art, see Shay et al., "A new class of alkali-swellable association thickeners", Surface Coatings international, JOCCA, Nov. 1993, Journal of the Oil & Color Chemists' Association, and Journal of Coatings Technology, Vol. 58(732), pp. 43 (1986).

In a binder according to the invention, the phenolic resin may consist of any suitable phenolic components. in a preferred embodiment, the phenolic resin consists essentially of the reaction product of phenol and aldehyde in a phenol to aldehyde ratio less than 1:1.

Generally, in the binder according to the invention, the concentration of the preferred phenol and aldehyde is adjusted to a suitable level depending on the application. In a preferred embodiment, the molar ratio of phenol to aldehyde is in the range of 1:2 to 1:6 preferably 1:3 to 1:4.5.

The content of solids of the resin depends on the particular application. In a preferred embodiment, the content of solids is 15% to 60% by weight, preferably 20 to 45% by weight.

The pH of the binder depends on the application. In an aspect, the pH is chosen so as to avoid separation of the emulsified phenolic resin. In a preferred embodiment, the pH is larger than or equal to 7 and most preferred in the range of 8 to 10.

Emulsifiable phenolic resins according to the invention ordinarily have a higher molecular weight than the state of the art phenolic resins, such known resins normally having a degree of conversion of phenol less than 99% and typically often a water dilutability larger than 5.5.

In an preferred embodiment the degree of conversion of phenol is equal to or above 99.4%. Preferably equal to or above 99.6%.

Generally, the water dilutability of the phenolic resin is less than or equal to 5. In a preferred embodiment, it is in the range of 0.5 to 5, preferably in the range of 1 to 4, particularly 2 to 4.

Suitable phenolic resins can be prepared by methods known in the art, such methods comprising reacting phenolic components, e.g. phenol with excess of formaldehyde, in the presence of an effective amount of alkaline catalyst for a sufficient reaction time and at a suitable temperature to provide a water dilutability of less than or equal to 5; said preparation optionally being further modified by an additional reaction with urea, melamin and/or dicyandiamide; see e.g. DK-A-4982/88, EP-A-0148050, and US 5 371 140.

Suitable phenols of the phenolic resin according to the invention include (see US 5 371 140) ortho-, para- directing hydroxy or amino aromatic compounds having 6 to 24 carbon atoms such as phenol itself (C₆H₅OH), naphthol, anthranol and substituted derivatives thereof. The substituents on the aromatic compound are independently selected from hydrogen; halogen, such as Cl, Br, and F; NH₂; and hydrocarbon radicals, such as:
(a) alkyl groups or radicals of 1 to 12 carbon atoms, preferably of 1 to 9 carbon atoms, and their various isomeric forms and substituted on the aromatic nucleus in the ortho- and para- position;
(b) cycloalkyl groups of 5 to 12 carbon atoms such as cyclohexyl, cyclopentyl, methylcyclohexyl, butylcyclohexyl, and so forth;
(c) aryl ketonic groups wherein the hydrocarbon portion is as defined below in (e);
(d) alkyl, aryl and cycloalkyl carboxylic groups wherein the hydrocarbon portion is defined as above in (a) and (b);
(e) aryl groups of 6 to 24 carbon atoms such as phenyl, naphthyl, anthryl, and the like;
(f) aryl substituted alkyl wherein the aryl is phenyl which may contain lower alkyl and/or hydroxy substituents so that the resulting hydroxy aromatic is, for example, a bisphenol;
(g) the oxyhydrocarbon radicals corresponding to the foregoing hydrocarbon radicals; and
(h) mixtures of the aforesaid hydroxy aromatics.

Suitable substituted phenols include meta-cresol, m-propyl phenol, m-isobutyl phenol, m-sec-butyl phenol, m-tert-butyl phenol, m-bromo phenol, m-chloro phenol, m-phenyl phenol, m-benzyl phenol, m-cetyl phenol, m-cumyl phenol, m-hydroxyacetophenone, m-hydroxybenzophenone, m-d-limonene phenol. The corresponding phenols substituted in the ortho- and para-positions can be used in part but are not preferred.

Mixtures of various hydroxy aromatic compounds mentioned herein also may be used.

Included among the phenolic reactants which may be used are those known as the "cresylic acids" and these often comprise heterogeneous mixtures having two reacting hydrogen positions on each of them; that is, compounds unsubstituted in the ortho- and para-positions, and hence, yield relatively unreactive resins. These compounds may include the following: 3,5-xylenol, m-cresol, 3,4-xylenol, 2,5-xylenol, 2,3-xylenol, phenol, p-cresol, o-cresol, 2,4-xylenol, and 2,6-xylenol. Cresylic acids or tar acids may include phenol and its homologs which may include cresols, xylenols, trimethyl phenols, ethyl phenols, and higher boiling materials such as dihydroxy phenols, polycyclic phenols and the like. They are often obtained by a low-temperature trimerization of coal, lignite, and the like, or a conventional high-temperature coke oven tar, or the liquid product of petroleum cracking both thermo and catalytic, shell oil, coal hydrogenation products, and the like.

Polyhydroxyaromatic reactants, such as resorcinol, may also be used. Also useful in this invention are mixtures of aniline and phenol to react with an aldehyde or ketone to produce a resole. Additionally, sodium lignosulfonate may also be substituted for a portion of the phenol.

Suitable aldehydes of the phenolic resin according to the invention include (see US 5 371 140) formaldehyde and any of its variations, such as higher concentrations of formalin, such as 30 percent or higher concentrations of formalin, or paraldehyde, acetaldehyde, propionaldehyde, isobutyraldehyde, isopentaldehyde, and the like. The aldehyde should have not more than 8 carbon atoms and should not detrimentally affect the resinification of the resin. Preferred aldehydes are those having from 1 to 4 carbon atoms, such as formaldehyde, which may be in aqueous solution (e.g. 30 percent or higher), or in any of its low polymeric forms such as paraformaldehyde or trioxane. Other aldehydes include para-aldehydes, furfuraldehyde, 2-ethylhexanal, ethylbutyraldehyde, heptaldehyde, benzaldehyde and crotonaldehyde. Glyoxal may also be used. These other aldehydes and mixtures thereof may be used in place of formaldehyde or in partial substitution thereof; but preferably, formaldehyde in one of its commercially available forms is used.

### A method of producing an emulsifiable phenolic resin

In an aspect of the invention, the objects of the invention are fulfilled by providing a method of producing an emulsifiable phenolic resin as defined in claim 1, said method comprising the steps as claimed in claim 16.

It has surprisingly turned out that by reacting the phenolic component, e.g. phenol with formaldehyde, in the presence of an effective amount of alkaline catalyst for a sufficient reaction time and at a suitable temperature to provide a degree of conversion of phenol of 99% or more, a high molecular weight phenolic resin can be produced which upon curing exhibits a low emission of polluting compounds such as free phenol and free ammonia, and which upon addition of a protective colloidal agent as claimed can be stabilized for a sufficient time for the phenolic resin to be kept in solution without separation and without loosing its binding capacity before its use.

Preferred embodiments are claimed in claims 17-19.

In a preferred embodiment, ammonia is added in an amount of 60 to 120 l per 1000 kg dry solids, whereby it is ensured that the tendency to separate or form solids or crystals in the resin during storage is reduced, and thereby improving the stability of the formed resin.

### An emulsifiable phenolic resin obtainable by the method

In another aspect according to the invention the objects of the invention are fulfilled by providing an emulsifiable phenolic resin is claimed in claim 20.

### A method of producing a stabilized phenolic binder

In still another aspect according to the invention the objects of the invention are fulfilled by providing a method of producing a stabilized aqueous phenolic binder for mineral wool as claimed in claim 21.

Preferred embodiments are claimed in claims 22, 23 and 24.

### A stabilized phenolic binder obtainable by the method

In still another aspect according to the invention these objects are fulfilled by providing a stabilized phenolic binder as claimed in claim 25.

### Use of a stabilized phenolic binder for mineral wool

In still another aspect according to the invention the objects of the invention are fulfilled by providing use a stabilized phenolic binder for mineral wool in the production of a mineral wool product as claimed in claim 26.

### A method of producing a mineral wool product

In still another aspect according to the invention the objects of the invention are fulfilled by providing a method of producing a mineral wool product as claimed in claims 27, 28 and 31

### A mineral wool product obtainable by the method

In still another aspect according to the invention the objects of the invention are fulfilled by providing a mineral wool product as claimed in claims 29 and 32.

### 3. DETAILED DESCRIPTION

### Degree of conversion

During the condensation process or the phenolic components samples are taken out in order to measure the content of free phenol. The amount of free phenol is measured by gas chromatography. From these data the degree of conversion is calculated.

### Water dilutability tests

A 5 ml sample of the reaction mixture of phenol and formaldehyde is slowly added deionised water to a permanent haze develops in the reaction mixture-water mixture. The volume of added water divided by five is taken as a measure of the water dilutability.

### Mineral wool product

Generally the mineral wool product is consolidated as a slab, sheet or other shaped article. Products according to the invention may be formulated for any of the conventional purposes of MMV fibres, for instance as slabs, sheets, tubes or other shaped products that are to serve as thermal insulation, fire insulation and protection or noise reduction and regulation, or in appropriate shapes for use as horticultural growing media.

### 4. EXAMPLES

The invention is further illustrated in examples.

### Example A - Production of a stabilized phenolic resin

In a 1.5 liters double-sided reactor vessel mounted with reflux, thermometer, agitator and inlets was supplied 94 g (1 mol) 60 °C warm phenol, and then 278 g 20 °C formalin having a formaldehyde content of 37% , i.e. corresponding to a formaldehyde-phenol ratio of 3.43:1.

At a temperature of about 35 °C of the mixture, 3.7 g Ca(OH)₂ was added. Then the temperature was increased up to about 80 °C. Following about 10 to 20 minutes the temperature increased to about 84 to 86 °C caused by exothermal reactions.

After about 85 minutes from addition of the catalyst, samples were taken for the determination of the degree of conversion of the phenol.

After reaching a degree of conversion of 99.4 %, 60 g of urea was added and the reaction mixture was cooled to about 60 °C and the solution was kept at 60 °C for 30 minutes and hereafter cooled to 35 °C with a cooling rate of 0,5 °/minute.

After cooling the urea-containing solution, 11 g 25% ammonia solution was added.

The process was stopped by precipitating the alkaline catalyst by addition of ammonium bi-carbonate.

0.019 g corresponding to 0.01 g Polyphobe® based on solid was added to form an emulsifiable stabilized resin.

### Test of stability of the resin

Example A was repeated with various amounts of Polyphobe® (see the following Table 1). The products obtained showed very good stability for amounts of less than about 0.10% Polyphobe® based on solid content.

Various amounts of alkaline catalyst were tested, all showing very good stability.

Examples were carried out with different amounts of urea all showing very good stability.

**Table 1**

| Protective colloidal agent | % dry solids | water (ml) | Stable |
|---|---|---|---|
| Polyphobe® | 0.10 | 60 | very |
| Polyphobe® | 0.05 | 60 | very |
| Polyphobe® | 0.02 | 60 | yes |
| Polyphobe® | 0.01 | 60 | yes |
| Polyphobe® | 0.002 | 60 | 8 minutes |

The stability is satisfactory if the emulsions are stable for at least 20 min.

### Test of phenol and ammonia emission from binders - full scale test

Resin binders with protective colloids were prepared as described in example A by stopping the condensation reaction at a degree of conversion at 99.4%. Water was added in order to form a binder. The binders were prepared in a 5 m³ reactor equipped with a jacket, stirrer and reflux.

Emission of phenol and ammonia from production of mineral wool were determined by collecting samples in the exhaust gas and measuring the samples by gas chromatography and ion chromatography. The results of average emissions are shown in Table 2.

**Table 2**

| Binder type | Phenol emitted (mg/Nm³) | Ammonia emitted (mg/Nm³) |
|---|---|---|
| Standard binder with no protective colloid | 12 | 82 |
| Binder according to the invention | 6 | 26 |

It can be concluded that extension of the reaction time in the production of the phenolic resin followed by stabilisation of the phenolic resin of the larger molecular weight by addition of protective colloidal agent according to the invention simultaneously reduces the emissions of both phenol and ammonia.

### Binder strength test - laboratory test

Standard bars of 25 x 10 x 150 mm were prepared of 3% by solid weight of resin as described in example A. Water was added to the resin in order to form a binder. The binder, silane and mineral wool fiber shots were mixed (i.e. mineral wool residues in form of e.g. beads) and cured.

Results of tensile strengths on standard bars under dry and humid conditions are shown in Table 3.

**Table 3**

| % added protective colloid by weight | Dry (MPa) | Humid (MPa) |
|---|---|---|
| 0% | 5.9 | 3.7 |
| Na-caseinate 1% | 5.7 | 2.3 |
| Na-caseinate 0.1% | 6.6 | 3.3 |
| Polyphobe® 0.1% | 5.7 | 2.9 |
| Polyphobe® 0.03% | 6.0 | 3.6 |

### Example B - Production of mineral wool products - full scale test

### Test of product quality

Stone wool products with a density of 150 kg/m³ and containing 3.5% by weight of standard binder including silane or silane-containing binder according to the invention were tested for delamination strength, both for fresh and aged products, i.e. products subjected to 15 minutes in 100% humidity at 121 °C and 1 ato. Results of delamination strength (kPa) are shown in Table 4.

The binders with protective colloids were prepared as described in example A.

The binders without protective colloids were prepared as described in example A but the reaction of the phenol was stopped at a degree of conversion of 98.4% phenol and no protective colloids were added. Also the amount of ammonia added was increased from 11 g to 59 g in order to achieve sufficient stability of the binder.

**Table 4**

| % added protective colloid by weight | Fresh product (kPa) | Aged product (kPa) |
|---|---|---|
| 0 % | 17-18.5 | 8.1-10.3 |
| Polyphobe® 0.1% | 16.0 | 6.5 |
| Polyphobe® 0.03% | 17.6 | 10.3 |

It appears from Table 4 that the addition of protective colloidal agent for achieving a suitable stabilisation of the binder lowers the delamination strength of the tested products compared to products containing no protective colloids.

However, when the protective colloidal agent is added in an amount of less than 0.1% by weight, the reduction of the delamination strength is insignificant.

## Claims

1. A stabilized aqueous phenolic binder for mineral wool comprising an emulsified phenolic resin consisting essentially of a phenolic resin having a degree of conversion of phenol of 99% or more, said binder containing a protective colloidal agent of an addition terpolymer consisting essentially of a carboxylic functional monomer X, a water-insoluble monomer Y, and a urethane functional associative monomer Z, having the formula
-[X]-[Y]-[Z]-
wherein 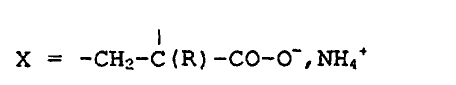 wherein R is H, methyl or ethyl, 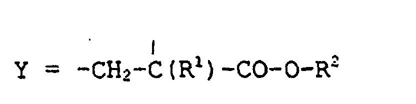 wherein R¹ is H, methyl or ethyl, and R² is methyl, ethyl, propyl or butyl, and 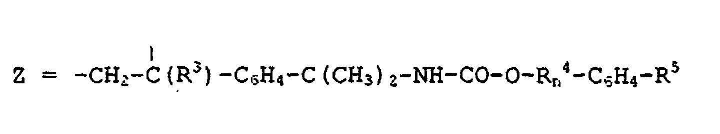 wherein R³ is H, methyl or ethyl, R⁴ is a C₂-C₄ oxylalkylene group and R⁵ is a C₅-C₁₅ group and n is 6-150.

2. A binder according to claim 1, wherein n is 40-60.

3. A binder according to claim 1 or 2, wherein the protective colloidal agent is a modified ethoxalate urethane.

4. A binder according to claim 1, 2 or 3, wherein the protective colloidal agent is Polyphobe® 102, 103 or TR117.

5. A binder according to any one of claims 1-4, wherein the protective colloidal agent is present in a concentration of less than 10% by weight based on solid content.

6. A binder according to claim 5, wherein the protective colloidal agent is present in a concentration of less than 0.1% by weight based on solid content.

7. A binder according to any one of claims 1-4, wherein the phenolic resin has a water dilutability of less than or equal to 5.

8. A binder according to claim 7, wherein the phenolic resin has a water diluability of from 2 to 4.

9. A binder according to any one of claims 1-8, wherein the phenolic resin consists essentially of the reaction product of phenol and aldehyde in a phenol to aldehyde ratio less than 1:1.

10. A binder according to any one of claims 1-9, wherein the molar ratio of phenol to aldehyde is in the range of 1:2 to 1:6.

11. A binder according to claim 10, wherein the molar ratio of phenol to aldehyde is in the range from 1:3 to 1:4.5.

12. A binder according to any one of claims 1-11, wherein the resin contains from 15% to 60% by weight of solids.

13. A binder according to claim 12, wherein the resin contains from 20 to 45% by weight of solids.

14. A binder according to any of claims 1-13, wherein the pH is larger than or equal to 7.

15. A binder according to any one of claims 1-14, wherein the content of free phenol is below 0.5% by weight.

16. A method of producing an emulsifiable phenolic resin composition comprising:
a) reacting a phenolic component with formaldehyde, in the presence of an effective amount of an alkaline catalyst for a sufficient reaction time and at a suitable temperature to provide a degree of conversion of phenol of 99% or more,
b) cooling the reaction mixture to stop further condensation, and
c) adding a protective colloidal agent as defined in claims 1-4.

17. A method according to claim 16, wherein the water dilutability of the cooled reaction mixture of step b) is less than or equal to 5.

18. A method according to claim 17, wherein the water diluability of the cooled mixture of step b) is in the range 2 to 4.

19. A method according to claim 17 or 18, further comprising neutralizing the alkaline catalyst.

20. An emulsifiable phenolic resin composition obtainable by the method as claimed in claims 16-19.

21. A method of producing a stabilized aqueous phenolic binder for mineral wool comprising providing an emulsifiable phenolic resin as defined in claims 1-10, or obtainable by the method as claimed in claims 16-19; adjusting the pH in the range of 6 to 10 and adding an effective amount of water to form a two-phase system.

22. A method according to claim 21 further comprising adding an aldehyde scavenger.

23. A method according to claim 21, further comprising adding a silane.

24. A method according to claim 21, further comprising adding ammonium sulphate.

25. A stabilized phenolic binder obtainable by the method as claimed in claims 21-24.

26. Use of a binder according to claims 1-15 and 21-24 in the production of mineral wool products.

27. A method of producing a mineral wool product, said method comprising the steps of:
a) providing a stabilized phenolic binder according to claims 1-15 and 21-24;
b) applying the binder to the mineral wool; and
c) curing the binder in the mineral wool.

28. A method according to claim 27, wherein the stabilized binder is produced immediately before being applied to said mineral wool.

29. A mineral wool product obtainable by the method as claimed in claims 27-28.

30. A mineral wool product containing 0.5 to 12% by weight, preferably 0.5 - 6% by weight of binder according to claims 1-15, 21-25 or obtainable by the method as claimed in claims 27-28.

31. A method according to claim 27 further comprising adjusting the pH of the binder in the range of 6 to 10 and adding an effective amount of water to form a two-phase system.

32. A mineral wool product obtainable by the method as claimed in claims 27-28 and 31.

## Patentansprüche

1. Stabilisiertes wässriges Phenolharz-Bindemittel für Mineralwolle, umfassend ein emulgiertes Phenolharz, das im wesentlichen aus einem Phenolharz mit einem Umwandlungsgrad von Phenol von 99% oder mehr besteht, wobei dieses Bindemittel ein Schutzkolloidmittel eines Additionsterpolymeren enthält, bestehend im wesentlichen aus einem carboxylfunktionellen Monomeren X, einem wasserunlöslichen Monomeren Y und einem urethanfunktionellen Assoziationsmonomeren Z, mit der Formel:
-[X]-[Y]-[Z]-
worin: 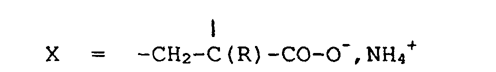 worin R = H, Methyl oder Ethyl ist, 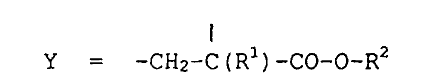 worin R¹ = H, Methyl oder Ethyl ist, und R² = Methyl, Ethyl, Propyl oder Butyl ist, und 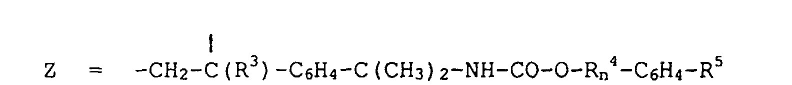 worin R³ = H, Methyl oder Ethyl ist, R⁴ = eine C₂-C₄-Oxylakylengruppe ist und R⁵ = eine C₅-C₁₅-Gruppe ist und n = 6 - 150 ist.

2. Bindemittel nach Anspruch 1, worin n = 40 - 60 ist.

3. Bindemittel nach Anspruch 1 oder 2, worin das Schutzkolloidmittel ein modifiziertes Ethoxalaturethan ist.

4. Bindemittel nach Anspruch 1, 2 oder 3, worin das Schutzkolloidmittel Polyphobe® 102, 103 oder TR117 ist.

5. Bindemittel nach einem der Ansprüche 1 - 4, worin das Schutzkolloidmittel in einer Konzentration von weniger als 10 Gew.-%, bezogen auf Feststoffgehalt, vorhanden ist.

6. Bindemittel nach Anspruch 5, worin das Schutzkolloidmittel in einer Konzentration von weniger als 0,1 Gew.-%, bezogen auf Feststoffgehalt, vorhanden ist.

7. Bindemittel nach einem der Ansprüche 1 - 4, worin das Phenolharz eine Wasserverdünnbarkeit von weniger als oder gleich 5 besitzt.

8. Bindemittel nach Anspruch 7, worin das Phenolharz eine Wasserverdünnbarkeit von 2 bis 4 besitzt.

9. Bindemittel nach einem der Ansprüche 1 - 8, worin das Phenolharz im wesentlichen aus dem Reaktionsprodukt von Phenol und Aldehyd mit einem Phenol-zu-Aldehyd-Verhältnis von weniger als 1:1 besteht.

10. Bindemittel nach einem der Ansprüche 1 - 9, worin das Molverhältnis von Phenol-zu-Aldehyd in dem Bereich von 1:2 bis 1:6 liegt.

11. Bindemittel nach Anspruch 10, worin das Molverhältnis von Phenol-zu-Aldehyd in dem Bereich von 1:3 bis 1:4,5 liegt.

12. Bindemittel nach einem der Ansprüche 1 - 11, worin das Harz von 15 Gew.-% bis 60 Gew.-% Feststoff enthält.

13. Bindemittel nach Anspruch 12, worin das Harz von 20 bis 45 Gew.-% Feststoff enthält.

14. Bindemittel nach einem der Ansprüche 1 - 13, worin der pH größer als oder gleich 7 ist.

15. Bindemittel nach einem der Ansprüche 1 - 14, worin der Gehalt an freiem Phenol unter 0,5 Gew.-% ist.

16. Verfahren zum Herstellen einer emulgierbaren Phenolharzzusammensetzung, umfassend:
a) Umsetzen einer phenolischen Komponente mit Formaldehyd in Anwesenheit einer effektiven Menge eines alkalischen Katalysators für eine ausreichende Reaktionszeit und bei einer geeigneten Temperatur zur Lieferung eines Phenol-Umwandlungsgrades von 99% oder mehr,
b) Abkühlen des Reaktionsgemisches zum Abstoppen weiterer Kondensation,
c) Zugeben eines Schutzkolloidmittels wie in Ansprüchen 1 - 4 definiert.

17. Verfahren nach Anspruch 16, bei welchem die Wasserverdünnbarkeit des abgekühlten Reaktionsgemisches von Stufe b) weniger als oder gleich 5 ist.

18. Verfahren nach Anspruch 17, bei welchem die Wasserverdünnbarkeit des abgekühlten Reaktionsgemisches von Stufe b) in dem Bereich von 2 bis 4 liegt.

19. Verfahren nach Anspruch 17 oder 18, weiter umfassend die Neutralisation des alkalischen Katalysators.

20. Emulgierbare Phenolharzzusammensetzung, erhältlich nach dem Verfahren wie in Ansprüchen 16 - 19 beansprucht.

21. Verfahren zum Herstellen eines stabilisierten wässrigen Phenolbindemittels für Mineralwolle, umfassend die Lieferung eines emulgierbaren phenolischen Harzes, wie in den Ansprüchen 1 - 10 definiert, oder erhältlich nach dem Verfahren, wie in den Ansprüchen 16 - 19 beansprucht, Einstellen des pH in den Bereich von 6 bis 10 und Zugeben einer effektiven Menge von Wasser zum Bilden eines Zweiphasensystems.

22. Verfahren nach Anspruch 21, weiter umfassend das Zugeben eines Aldehydfängers.

23. Verfahren nach Anspruch 21, weiter umfassend das Zugeben eines Silans.

24. Verfahren nach Anspruch 21, weiter umfassend das Zugeben von Ammoniumsulfat.

25. Stabilisiertes Phenolbindemittel, erhältlich nach dem Verfahren wie in den Ansprüchen 21 - 24 beansprucht.

26. Verwendung eines Bindemittels nach den Ansprüchen 1 - 15 und 21 - 24 bei der Herstellung von Mineralwolleprodukten.

27. Verfahren zum Herstellen eines Mineralwolleproduktes, wobei dieses Verfahren die Stufen umfaßt von:
a) Bereitstellen eines stabilisierten Phenolbindemittels nach den Ansprüchen 1 - 15 und 21 - 24,
b) Aufbringen des Bindemittels auf die Mineralwolle, und
c) Aushärten des Bindemittels in der Mineralwolle.

28. Verfahren nach Anspruch 27, bei welchem das stabilisierte Bindemittel unmittelbar vor seinem Aufbringen auf diese Mineralwolle hergestellt wird.

29. Mineralwolleprodukt, erhältlich nach dem Verfahren wie in den Ansprüchen 27 - 28 beansprucht.

30. Mineralwolleprodukt, enthaltend 0,5 bis 12 Gew.-%, bevorzugt 0,5 bis 6 Gew.-%, von Bindemittel nach den Ansprüchen 1 -15, 21 - 25 oder erhältlich nach dem Verfahren wie in den Ansprüche 27 - 28 beansprucht.

31. Verfahren nach Anspruch 27, weiter umfassend das Einstellen des pH des Bindemittels in den Bereich von 6 bis 10 und das Zugeben einer effektiven Menge von Wasser zur Bildung eines Zweiphasensystems.

32. Mineralwolleprodukt, erhältlich nach dem Verfahren wie in den Ansprüchen 27 - 28 und 31 beansprucht.

## Revendications

1. Liant phénolique aqueux stabilisé pour laine minérale comprenant une résine phénolique émulsionnée essentiellement composée d'une résine phénolique ayant un degré de conversion du phénol de 99 % ou plus, ledit liant contenant un agent colloïdal de protection à base d'un terpolymère d'addition essentiellement composé d'un monomère X à fonction carboxylique, d'un monomère Y insoluble dans l'eau, et d'un monomère Z associatif à fonction uréthanne, répondant à la formule
-[X]-[Y]-[Z]-
dans laquelle 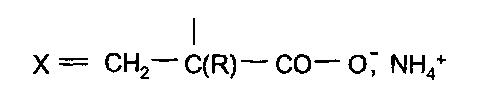 où R est H, méthyle ou éthyle, 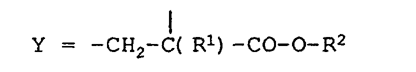 où R¹ est H, méthyle ou éthyle, et R² est méthyle, éthyle, propyle ou butyle, et 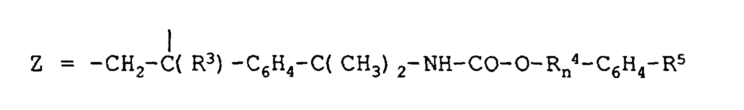 où R³ est H, méthyle ou éthyle, R⁴ est un groupe oxyalkylène C₂-C₄ et R⁵ est un groupe C₅-C₁₅ et n vaut de 6 à 150.

2. Liant selon la revendication 1, dans lequel n vaut de 40 à 60.

3. Liant selon la revendication 1 ou 2, dans lequel l'agent colloïdal de protection est un éthoxalate-uréthanne modifié.

4. Liant selon la revendication 1, 2 ou 3, dans lequel l'agent colloïdal de protection est un Polyphobe® 102, 103 ou TR117.

5. Liant selon l'une quelconque des revendications 1 à 4, dans lequel l'agent colloïdal de protection est présent à une concentration inférieure à 10 % en poids sur la base de la teneur en solides.

6. Liant selon la revendication 5, dans lequel l'agent colloïdal de protection est présent à une concentration inférieure à 0,1 % en poids sur la base de la teneur en solides.

7. Liant selon l'une quelconque des revendications 1 à 4, dans lequel la résine phénolique a une capacité de dissolution dans l'eau inférieure ou égale à 5.

8. Liant selon la revendication 7, dans lequel la résine phénolique a une capacité de dissolution dans l'eau de 2 à 4.

9. Liant selon l'une quelconque des revendications 1 à 8, dans lequel la résine phénolique est essentiellement composée du produit de la réaction d'un phénol et d'un aldéhyde, le rapport phénol à aldéhyde étant inférieur à 1:1.

10. Liant selon l'une quelconque des revendications 1 à 9, dans lequel le rapport molaire phénol à aldéhyde est dans la plage de 1:2 à 1:6.

11. Liant selon la revendication 10, dans lequel le rapport molaire phénol à aldéhyde est dans la plage de 1:3 à 1:4,5.

12. Liant selon l'une quelconque des revendications 1 à 11, dans lequel la résine contient de 15 à 60 % en poids de solides.

13. Liant selon la revendication 12, dans lequel la résine contient de 20 à 45 % en poids de solides.

14. Liant selon l'une quelconque des revendications 1 à 13, dans lequel le pH est supérieur ou égal à 7.

15. Liant selon l'une quelconque des revendications 1 à 14, dans lequel la teneur de phénol libre est inférieure à 0,5 % en poids.

16. Procédé de préparation d'une composition de résine phénolique émulsionnable comprenant les étapes consistant à :
a) faire réagir un composé phénolique avec un formaldéhyde, en présence d'une quantité efficace d'un catalyseur alcalin pendant un temps de réaction suffisant et à une température convenable pour obtenir un degré de conversion du phénol de 99 % ou plus,
b) refroidir le mélange réactionnel pour arrêter la réaction de condensation, et
c) ajouter un agent colloïdal de protection tel que défini dans les revendications 1 à 4.

17. Procédé selon la revendication 16, dans lequel la capacité de dissolution dans l'eau du mélange réactionnel refroidi de l'étape b) est inférieure ou égale à 5.

18. Procédé selon la revendication 17, dans lequel la capacité de dissolution dans l'eau du mélange refroidi de l'étape b) est dans la plage de 2 à 4.

19. Procédé selon la revendication 17 ou 18, comprenant en outre l'étape consistant à neutraliser le catalyseur alcalin.

20. Composition de résine phénolique émulsionnable pouvant être obtenue par le procédé selon les revendications 16 à 19.

21. Procédé de préparation d'un liant phénolique aqueux stabilisé pour laine minérale comprenant les étapes consistant à préparer une résine phénolique émulsionnable telle que définie dans les revendications 1 à 10, ou pouvant être obtenue par le procédé selon les revendications 16 à 19 ; ajuster le pH dans la plage de 6 à 10 et ajouter une quantité efficace d'eau de manière à former un système à deux phases.

22. Procédé selon la revendication 21 comprenant en outre l'étape consistant à ajouter un accepteur d'aldéhyde.

23. Procédé selon la revendication 21 comprenant en outre l'étape consistant à ajouter un silane.

24. Procédé selon la revendication 21 comprenant en outre l'étape consistant à ajouter du sulfate d'ammonium.

25. Liant phénolique stabilisé pouvant être obtenu par le procédé selon les revendications 21 à 24.

26. Utilisation d'un liant selon les revendications 1 à 15 et 21 à 24 dans la fabrication de produits à base de laine minérale.

27. Procédé de fabrication d'un produit à base de laine minérale, ledit procédé comprenant les étapes consistant à :
a) préparer un liant phénolique stabilisé selon les revendications 1 à 15 et 21 à 24 ;
b) appliquer le liant à la laine minérale ; et
c) durcir le liant dans la laine minérale.

28. Procédé selon la revendication 27, dans lequel le liant stabilisé est préparé immédiatement avant d'être appliqué à ladite laine minérale.

29. Produit à base de laine minérale pouvant être obtenu par le procédé selon les revendications 27-28.

30. Produit à base de laine minérale contenant 0,5 à 12 % en poids, de préférence, 0,5 à 6 % en poids de liant selon les revendications 1 à 15, 21 à 25 ou pouvant être obtenu par le procédé selon les revendications 27-28.

31. Procédé selon la revendication 27 comprenant en outre l'étape consistant à ajuster le pH du liant dans la plage de 6 à 10 et à ajouter une quantité efficace d'eau de manière à former un système à deux phases.

32. Produit à base de laine minérale pouvant être obtenu par le procédé selon les revendications 27-28 et 31.
